# EUROPEAN PATENT APPLICATION

(11) **EP 4 465 110 A1**
(43) Date of publication of application: **20.11.2024**
(21) Application number: 24174005.9
(22) Date of filing: 03.05.2024
(51) Int. Cl.: G02B 23/12, G02B 23/18, G02B 23/20

(54) **NIGHT VISION APPARATUS AND BRIDGE MOUNT THEREFOR**

(30) Priority: 05.05.2023 US 202363464276 P
(71) Applicant: Klein, Avner, South Melbourne, Victoria 3205 (AU)
(72) Inventor: Klein, Avner, South Melbourne, Victoria 3205 (AU)
(74) Representative: Ponchiroli, Simone

(57) **Abstract**

A bridge member (4) for connecting first and second image intensifier tubes (6,8) in a portable night vision apparatus (2) including a body (32); a first pivotable member (21) associated with the first image intensifier tube (6); and a second pivotable member (23) associated with the second image intensifier tube (6). The bridge member (4) is configured to be connected to a helmet (3) through a helmet mount (60). The bridge member (4) is configured to move between a first position and a second position, the first position corresponding to the first and second image intensifier tubes (6,8) being in an active position, the second position corresponding to the first and second image intensifier tubes (6,8) being in a stored position, the second position corresponding to the first and second image intensifier tubes (6,8) being positioned adjacent an outer surface of the helmet (3). The first pivotable member (21) is configured to move the first image intensifier tube (6) between the first and second positions. The second pivotable member (23) is configured to move the second image intensifier tube (8) between the first and second positions.

## Description

### FIELD OF THE INVENTION

This invention relates to night vision apparatus and, in particular, to a bridge member for connecting first and second image intensifier tubes in the night vision apparatus.

### BACKGROUND OF THE INVENTION

Night vision goggles have over the years been adapted to be hands-free whereby a user is able to see through respective image intensifier tubes whilst having their hands free to do other tasks. In such situations, the night vision goggles are mounted to the front of the helmet where they can be stored on the helmet, or on a harness, when not in use and adapted to be moveable to a position where a user can see through the tubes in a dark environment. Most applications of this apparatus are used by military personnel on land, navy personal at sea and air force personnel in aircrafts in the air. There are other applications such as for use by a pilot in helicopters, jet planes and fixed wing aircraft. Law enforcement officers also in some instances, use this type of equipment.

A particular problem with existing helmet or harness mounted goggles is that when the goggles are not used, they are positioned above the helmet. The image intensifier tubes and lenses (optical channel), which carry most of the weight of the whole apparatus, are positioned too far away from the surface of the helmet. This means that the centre of gravity is too high and creates extra problems for the wearer of the helmet. As it is, the weight of the helmet plus the night vision goggles is heavy to wear for extended periods of time and, having a high centre of gravity, can put extra pressure on the head and neck of the user, particularly when subjected to gravitational forces or continuous movement such as in the field.

Furthermore, having the image intensifier tubes located too far away from the helmet can expose them to damage or being entangled with other structures, such as wire and branches.

Many existing night vision apparatus have a computer processing device that is attached to the helmet and this is used to send information about the use of the device and its characteristics to and from an external reader. It is in a separate location to the goggles, and thus, is more expensive to implement and has increased complexity with respect to transmitting and receiving data.

The present invention seeks to overcome one or more of the above disadvantages. Therefore, it is desirable to provide a night vision apparatus with a lower centre of gravity with respect to a helmet to which the night vision apparatus is attached.

Further, it is desirable to provide a night vision apparatus which stores the image intensifier tubes close to a helmet to which the night vision apparatus is attached.

Additionally, it is desirable to provide a night vision apparatus in which the computer processing device is less expensive to implement.

Also, it is desirable to provide a night vision apparatus in which the complexity of transmitting and receiving data between the computer processing device and the goggles is reduced.

### SUMMARY OF THE INVENTION

According to a first aspect of the invention, there is provided a bridge member for connecting first and second image intensifier tubes in a portable night vision apparatus including:
a body;
a first pivotable member associated with said first image intensifier tube;
a second pivotable member associated with said second image intensifier tube;
said bridge member being configured to be connected to a helmet through a helmet mount;
said bridge member being configured to move between a first position and a second position, said first position corresponding to said first and second image intensifier tubes being in an active position, said second position corresponding to said first and second image intensifier tubes being in a stored position, said second position corresponding to the first and second image intensifier tubes being positioned adjacent an outer surface of the helmet;
said first pivotable member being configured to move said first image intensifier tube between said first and second positions;
said second pivotable member being configured to move said second image intensifier tube between said first and second positions.

The first pivotable member may include a first hinge and the second pivotable member may include a second hinge, the first and second hinges connected to and spaced apart from the body.

The first hinge may include a first hinge axis and the second hinge may include a second hinge axis. The bridge member may further include a helmet mount connector. The helmet mount connector may be secured to said body and the first hinge axis and the second hinge axis may be located in a hinge axis plane where the hinge axis plane is at or above a plane through a top side of said connector.

The bridge member may further include a helmet mount connector secured to said body and wherein the first hinge axis and the second hinge axis may be located in a hinge axis plane where the hinge axis plane is at or between a plane in which a top side of said body is located and a top side of said connector is located.

The first pivotable member may further include a first leg connecting the first hinge to the first image intensifier tube; the first leg being configured to rotate with respect to said first hinge.

The second pivotable member may further include a second leg connecting the second hinge to the second intensifier tube, said second leg being configured to rotate with respect to the second hinge.

The first leg may be configured to rotate about the first hinge up to 180 degrees in moving between the first position and the second position.

The second leg may be configured to rotate about the second hinge up to 180 degrees in moving between the first position and the second position.

The bridge member may further include a helmet mount connector attached to a top side of the body.

The first hinge axis of the first hinge and the second hinge axis of the second hinge may be in a plane that is positioned at any one of (a) at or adjacent to a top side of said body or (b) in between a top side of the body and a top side of the connector or (c) above and away from a top side of the connector, when the first and second image intensifier tubes are in use in the first position.

The bridge member may further include a first connecting member for connecting the first leg of the bridge member to the first image intensifier tube and a second connecting member for connecting the second leg of the bridge member to the second image intensifier tube.

The body of the bridge member may be configured to house a printed circuit board that enables storage of data and transmission of data between components of the night vision apparatus and between the night vision apparatus and an external transceiver.

The bridge member may further have a battery compartment attachable to an underneath side of the body for providing power to the printed circuit board.

The bridge member may further have an interface member attachable to an underneath side of the body for providing power and data to the printed circuit board. A battery compartment may be attachable to an underneath side of the interface member for also providing power to the printed circuit board.

The bridge member may further include a first arm member connecting the first hinge to the body.

The bridge member may further include a second arm member connecting the second hinge to the body.

According to a second aspect of the invention, there is provided a night vision apparatus for attachment to a helmet including:
first and second image intensifier tubes; and
a bridge member connecting said first and second image intensifier tubes;
said bridge member including:
   a body;
   a first pivotable member associated with said first image intensifier tube;
   a second pivotable member associated with said second image intensifier tube;
   said bridge member being configured to be connected to said helmet through a helmet mount;
   said bridge member being configured to move between a first position and a second position, said first position corresponding to said first and second image intensifier tubes being in an active position, said second position corresponding to said first and second image intensifier tubes being in a stored position, said second position corresponding to the first and second image intensifier tubes being positioned adjacent an outer surface of the helmet;
   said first pivotable member being configured to move said first image intensifier tube between said first and second positions;
   said second pivotable member being configured to move said second image intensifier tube between said first and second positions.

### BRIEF DESCRIPTION OF THE DRAWINGS

Preferred embodiments of the invention will hereinafter be described, by way of example only, with reference to the drawings in which:
Figure 1 is a front perspective view of night vision apparatus in an active, usable position;
Figure 2 is a front perspective view of the night vision apparatus of Figure 1 with a pair of image intensified tubes or barrels set wider apart than shown in Figure 1;
Figure 3 is a perspective view similar to Figure 2 except that the image intensifier tubes are even wider apart than shown in Figure 2;
Figure 4 is a front view of the apparatus shown in Figure 3;
Figure 5 is a perspective view from underneath of the apparatus of Figure 1;
Figure 6 is a front perspective view from above of the night vision apparatus of Figure 1 attached to a helmet mount;
Figure 7 is a view similar to Figure 5 but showing a battery compartment and interface member that modularly attaches to the underneath part of the bridge member;
Figure 8 is a front perspective view from above and to the right of a bridge member according to an embodiment of the invention that attaches to two separate image intensifier tubes;
Figure 9 is a front perspective view from above and to the left of the bridge member of Figure 8;
Figure 10 is a front view of the bridge member with legs of the bridge member opposed to each other by 180 degrees;
Figure 11A and 11B are views of the bridge member in an in-use position;
Figure 12 is a side view of the apparatus of Figure 1 attached to a helmet, through a helmet mount, and in an active (in-use) position;
Figure 13A is a perspective view from above and behind where the apparatus shown in Figure 12 is either in the process of being moved to an unused (inactive or stored) position from an active position or being moved from an unused (inactive or stored) position to an active position;
Figure 13B is a plan view of Figure 13A where the apparatus shown in figure 12 is either in the process of being moved to an unused (inactive or stored) position from an active position or being moved from an unused (inactive or stored) position to an active position;
Figure 14 is a side view of the apparatus shown in Figure 13;
Figure 15 is a front view of the apparatus shown in Figure 12 as mounted in an active position on the helmet for the user;
Figures 16A and 16B are views of the bridge member in a position when not used and stored above the helmet;
Figure 17A is a side view of the apparatus shown in an inactive (stored) position mounted on the helmet with the optical components positioned adjacent to an outer surface of the helmet and the bridge member positioned as shown in Figures 16A and 16B;
Figure 17B is a plan view of apparatus mounted on the helmet with the optical components about to be positioned in a stored, inactive position adjacent an outer surface of the helmet;
Figure 17C is a plan view similar to Figure 17B with the optical components in a stored position adjacent to the helmet outer surface;
Figure 17D is a front of the apparatus of Figure 17C;
Figures 18A, 18B and 18C show various views of components of a barrel having an image intensifier tube with a half size screen fitted thereto;
Figures 19A, 19B and 19C show various views of components of a barrel having an image intensifier tube with a full size screen fitted thereto; and
Figures 20A and 20B show perspective views similar to Figures 19A to 19C.

### DETAILED DESCRIPTION OF THE PREFERRED EMBODIMENTS

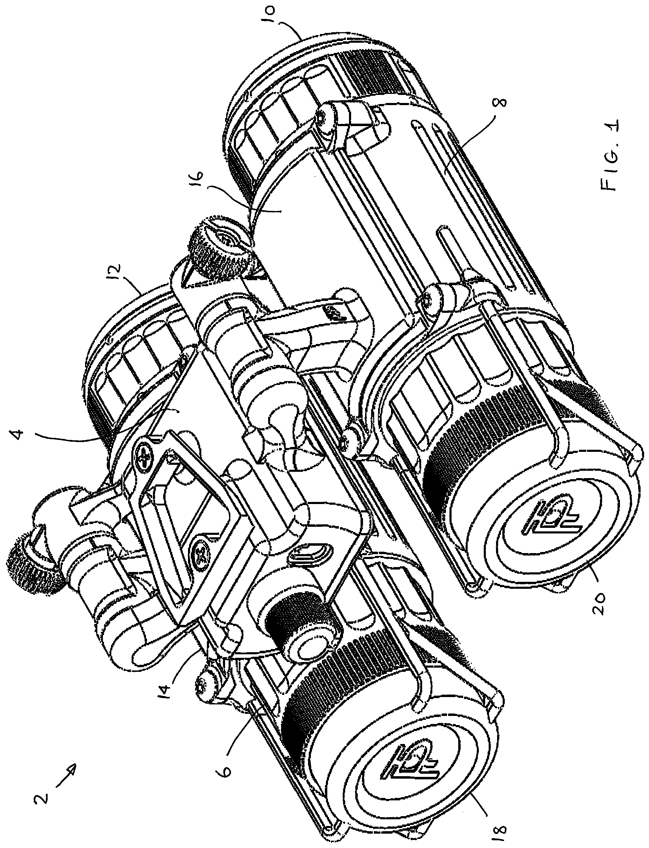

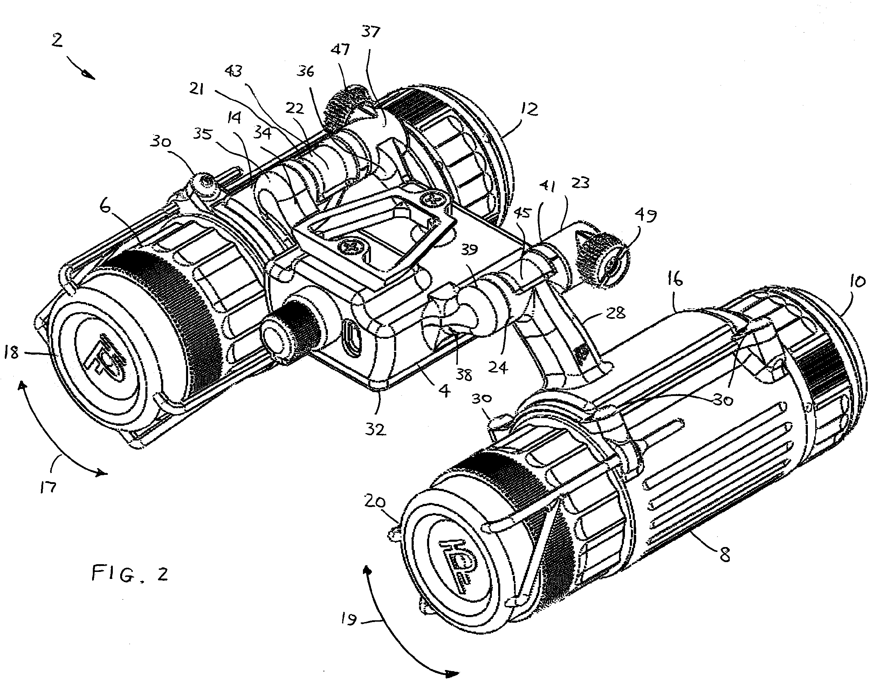

Referring to Figure 1, there is shown a night vision apparatus 2 in the form of goggles, that has a bridge member 4 that is connected to a first optical component 6 through a first connecting member 14, in the form of a plate, and to a second optical component 8 through a second connecting member 16, in the form of a plate. Each of the optical components or barrels 6, 8 are first and second image intensifier tubes which are designed to receive light from an object being viewed at first ends 10 and 12 and transfers an image of the object to the image intensifier tubes 6 and 8. The tubes 6, 8 make it possible for a user to view a particular object in relatively dark conditions by receiving visible and / or infra-red light images of the object that are input to second ends 18 and 20. The image intensifier tubes 6, 8 then convert that image to an intensified output image to be seen by the use at respective first ends 10 and 12. The image intensifier tubes 6, 8 are known in the art and it is appreciated that other such constructions can be used. The bridge member 4 is shown in Figures 1 and 2 in a first position, being an active, in-use position.

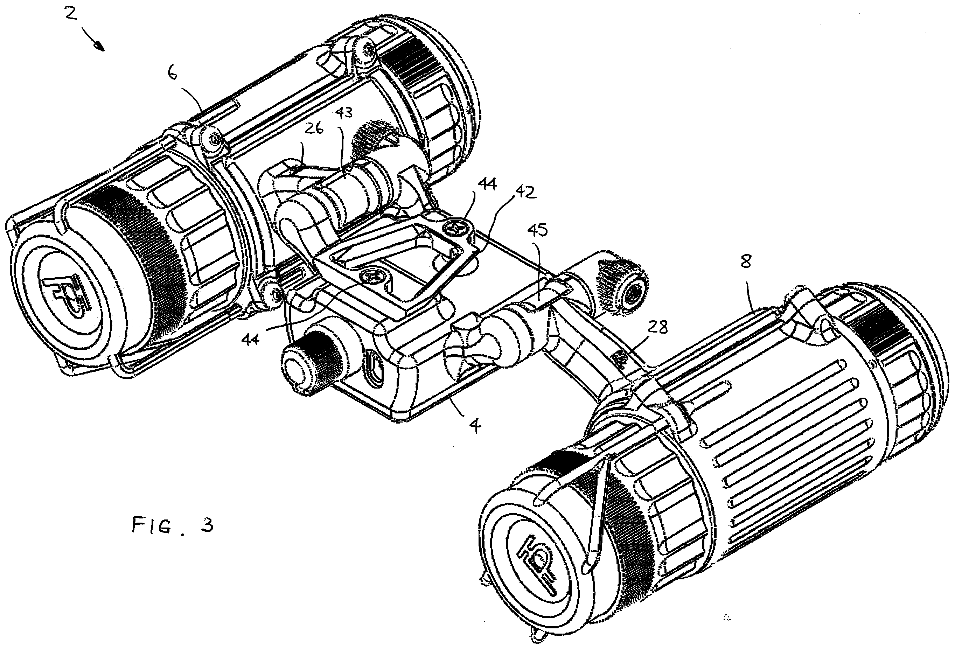

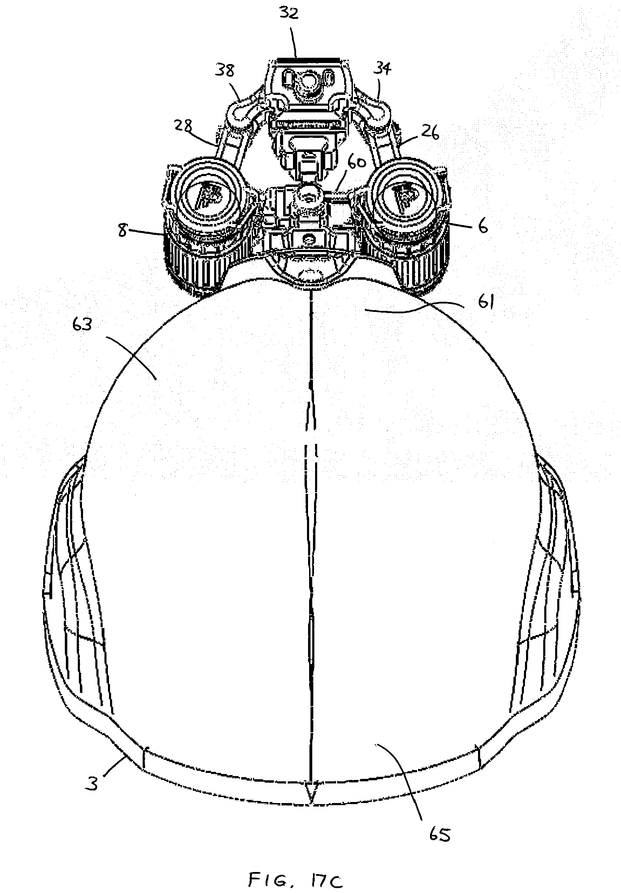

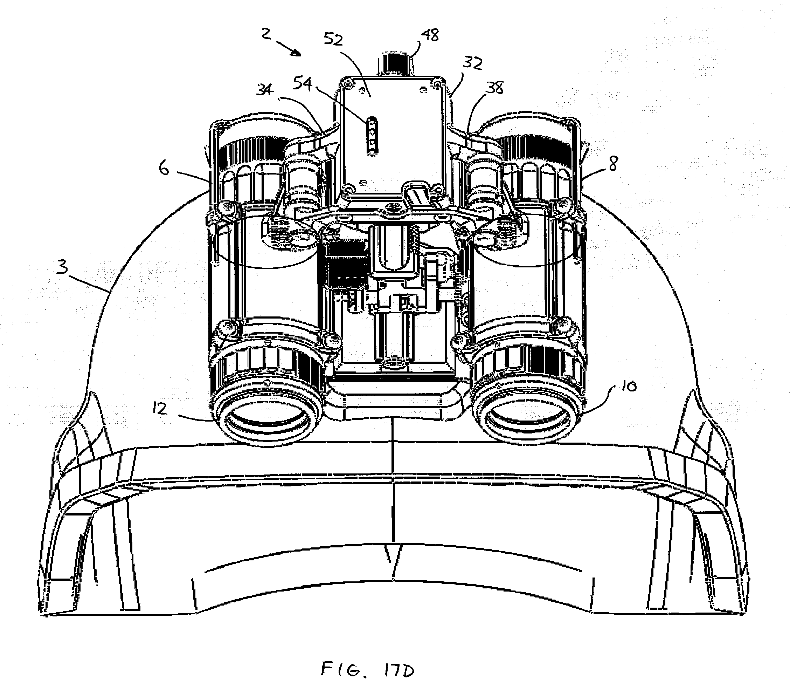

Referring to Figure 2, there is shown the apparatus 2 with the first and second image intensifier tubes 6 and 8 set further apart in distance from each other compared to Figure 1. This is possible due to a first pivotable member 21, including a first hinge 22, and a second pivotable member 23, including a second hinge 24, forming part of the bridge member 4. The first and second hinges 22, 24 are connected to, and spaced apart, from body 32 of the bridge member 4. A first leg 26 (shown in Figure 3) connects the first hinge 22 to the first connecting member 14 (and therefore to the first tube 6), while a second leg 28 connects the second hinge 24 to the second connecting member 16 (and therefore to the second tube 8). Each of the first and second legs 26 and 28 are able to rotate or pivot about the respective first and second hinges 22, 24 and therefore rotate the tubes 6 and 8 in a range of angles in both directions, as indicated by double-headed arrows 17 and 19. The first pivotable member includes first leg 26 which connects the first hinge 22 to the first image intensifier tube 6, through first connecting member 14. The second pivotable member 23 includes the second leg 28 which connects the second hinge 24 to the second intensifier tube 8, through second connecting member 16. The first leg 26 is configured to rotate with respect to the first hinge 22 and said second leg 28 is configured to rotate with respect to the second hinge 24. The respective first and second connecting or mounting members 14 and 16 have a contour shaped to match the contour of the outside of the tubes 6 and 8 and connect the bridge member 4 to the tubes 6 and 8 through a series of threaded screws 30. First and second knobs 47 and 49 enable correct adjustment of tension to be applied to the hinges 22, 24 to set the respective positions of the tubes 6, 8 for the eyes of the user or wearer. The first pivotable member 21 moves the first image intensifier tube 6 between the first position, shown in Figures 1 and 2, and a second position, shown in Figures 17C and 17D. The second pivotable member 23 moves the second image intensifier tube 8 between the first position, shown in Figures 1 and 2, and a second position, shown in Figures 17C and 17D.

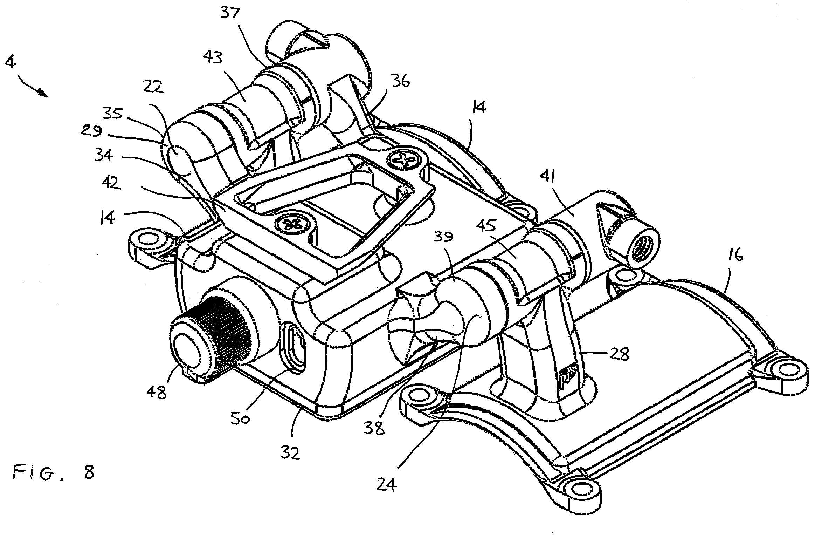

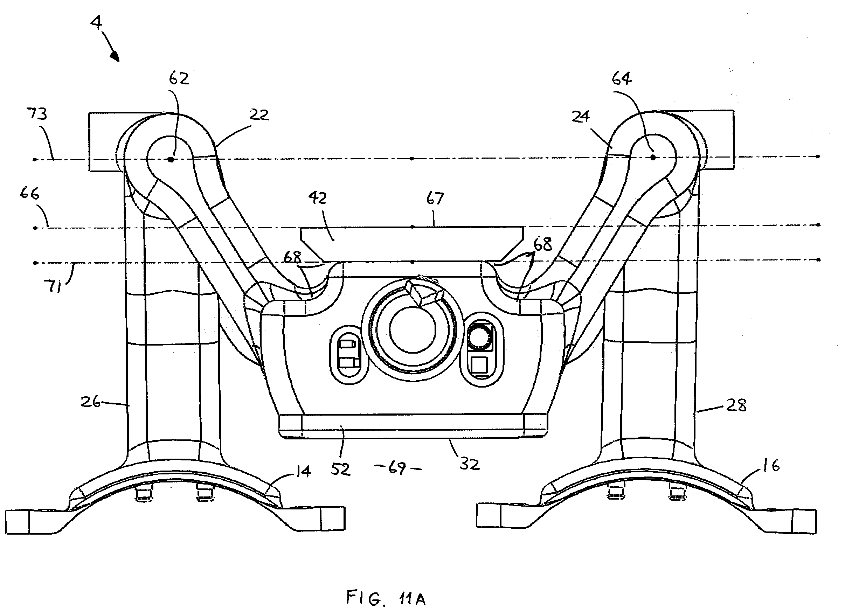

The bridge member 4 has a body 32. First hinge 22 is connected to body 32 via a first arm member 29 (Figure 8), having first and second arms 34 and 36. First leg 26 is connected between the first connecting member 14 and the first hinge 22. First leg 26 is able to fully rotate about first hinge 22 through a first end 43 (forming part of the first pivotable member 21) of first leg 26 between where first and second head portions 35 and 37 of the first and second arms 34 and 36 connect to form the first hinge 22. Similarly, second hinge 24 is connected to body 32 through a second arm member 31 having first and second arms 38 and 40. Second leg 28 connects second connecting member 16 to the second hinge 24. Second leg 28 is able to fully rotate about the second hinge 24 through a first end 45 (forming part of the second pivotable member 23) of second leg 28 which is positioned between first and second head portions 39 and 41 of the first and second arms 38 and 40. Each hinge 22 and 24 is essentially a pin with respective pin longitudinal axes 62, 64 (Figure 11A) around which the first arm member 29 (with first end 43 of first leg 26) and the second arm member 31 (with first end 45 of second leg 28) pivot or rotate.

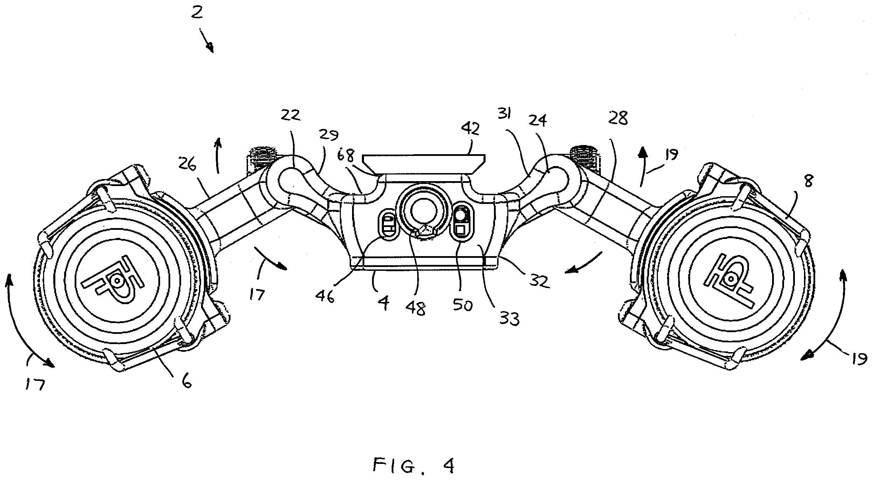

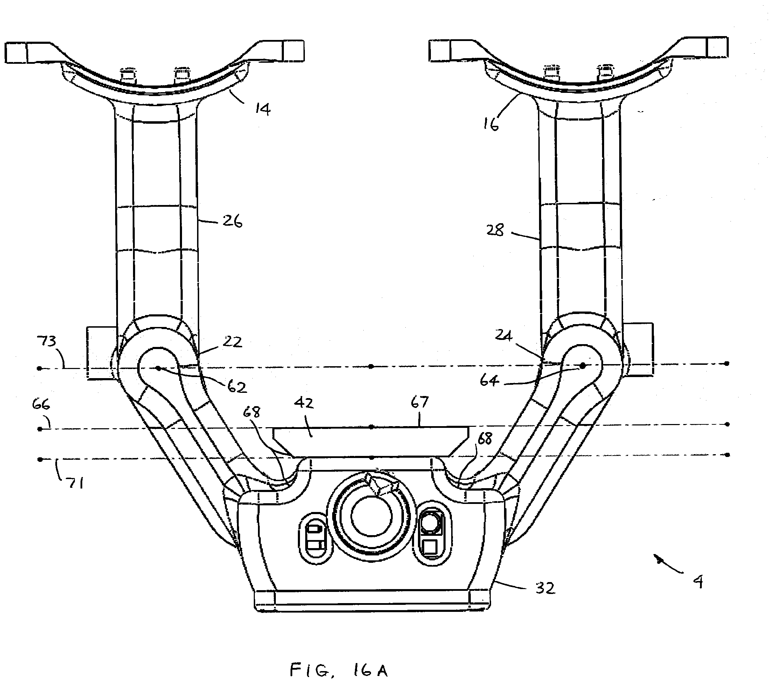

In Figures 3 and 4 there is shown the apparatus 2 where each of the tubes 6 and 8 are almost fully extended outwardly to their maximum extension from the bridge member 4. A front view of this position is shown in Figure 4. Each of the first and second legs 26 and 28 can independently move about the respective first and second hinges 22 and 24 within a range of angles of about 180 to 210 degrees (and up to 180 degrees) with respect to the longitudinal axes 62, 64. Thus, each of the legs 26, 28 can rotate about the respective hinges 22, 24 from zero up to at least 180 degrees, and beyond to 210 degrees and further if required. This is from the position shown in Figure 1 (or Figure 11A) to a position shown in Figures 16A.

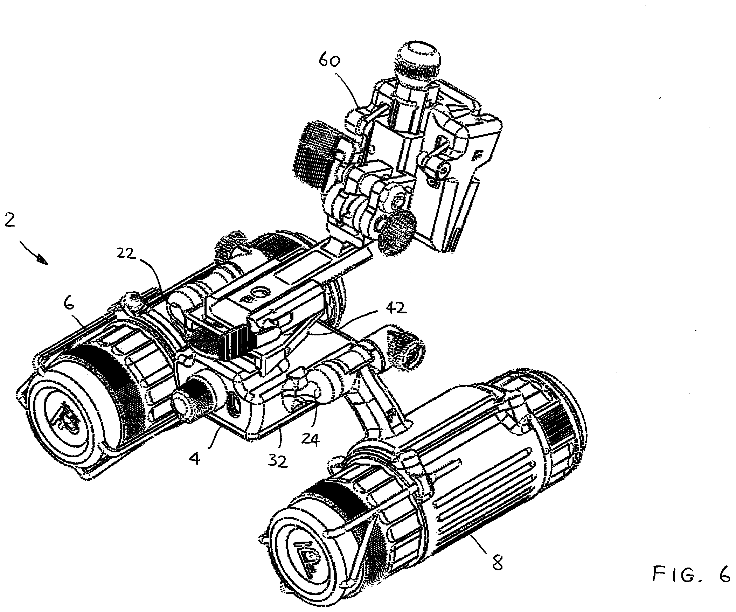

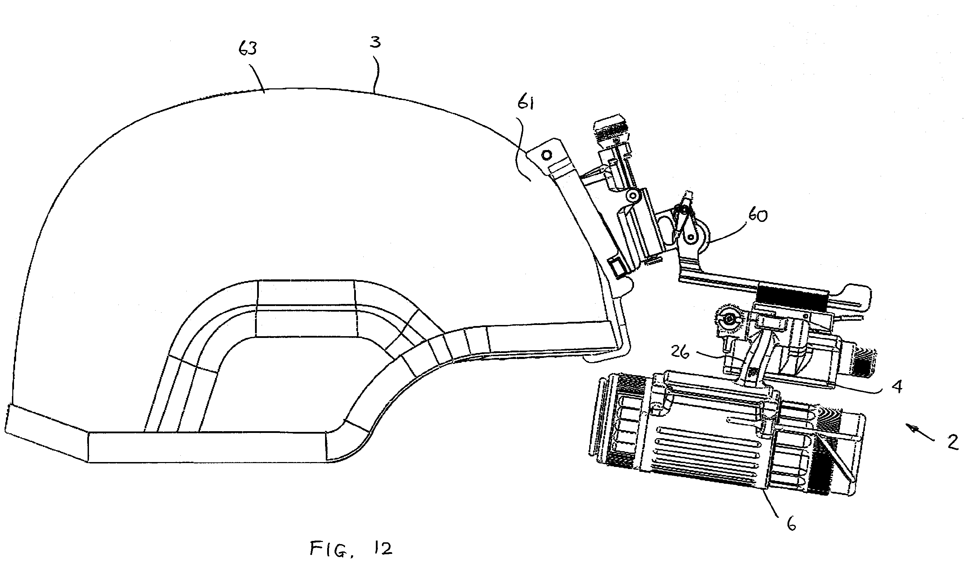

The body 32 of the bridge member 4 has a helmet mount connector 42 that connects the bridge member 4, and therefore the apparatus 2, to a helmet mount 60 (Figures 6, 12) which is mounted on a helmet 3 to be worn by a user. The helmet mount connector 42 is secured to a top side 68 of the body 32 through securing means such as screws 44. Located inside the body 32 is a printed circuit board that contains, among other electronic components, a processor, a memory, a power supply, various switches and input / output ports for transmission and reception of data between the mainboard and other components of the apparatus 2. A detailed description of the printed circuit board is provided in US Patent Number 10,061,113. The entire content of US Patent Number 10,061,113 is hereby incorporated by reference.

Located on a front side 33 of the body 32 is an infra-red or IR sensor 46, a switch 48 and a light sensor 50 for detecting the ambient light levels. The switch 48 has three settings, one setting in which a user can select an ambient light setting, a second setting for infra-red light and a third setting for the use of accelerometers to detect the orientation of the apparatus 2.

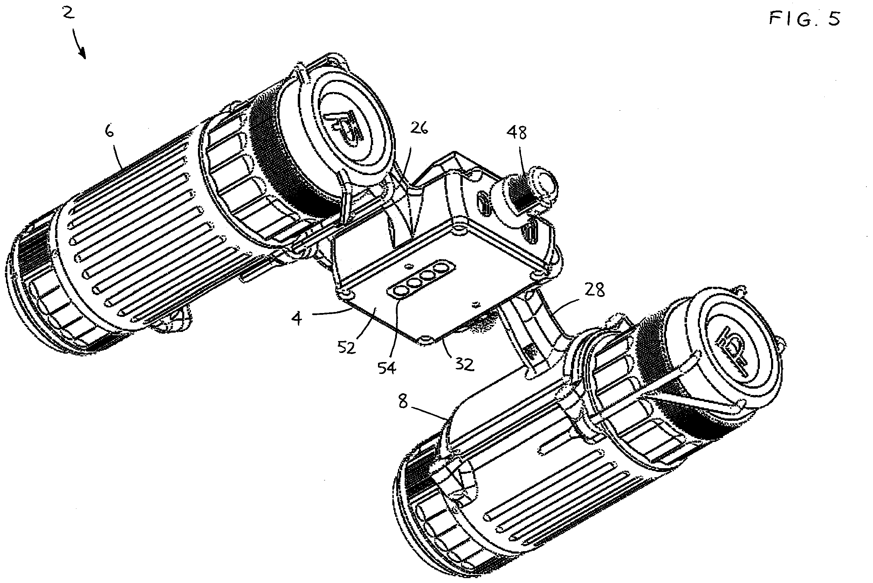

Referring to Figure 5 there is shown an underneath perspective view of the apparatus 2. Forming part of the bottom side 52 of the body 32 is a series 54 of pressure pins that enable the connection of two power pins and two data pins to the printed circuit board located inside body 32.

Shown in Figure 6 is a perspective view from the front of the apparatus 2 with a helmet mount 60 connected to the helmet mount connector 42 that is affixed to the top side 68 of the body 32 of bridge member 4. The helmet mount 60, in turn, is connected to a front portion 61 of a helmet 3.

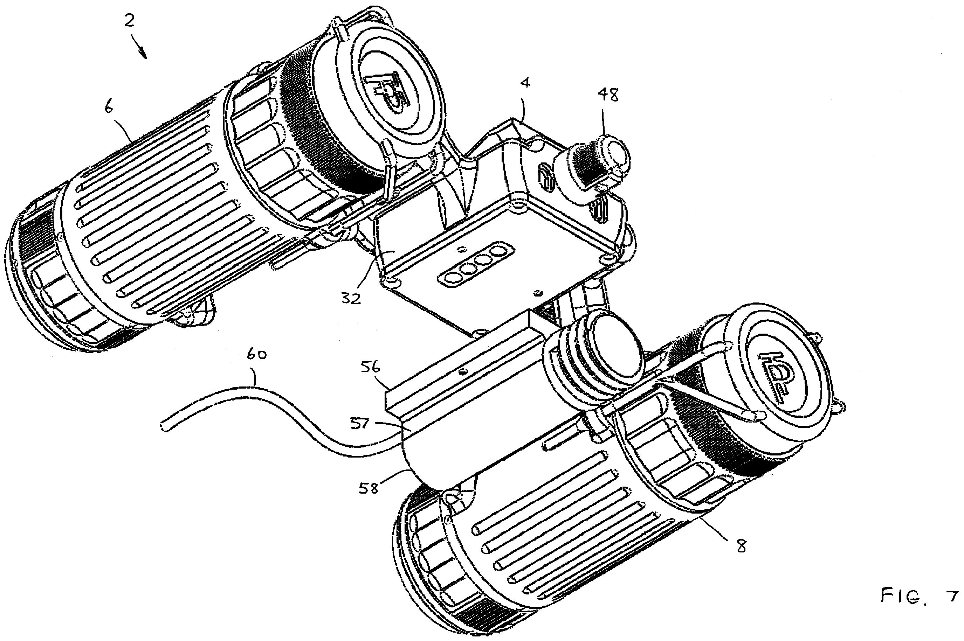

Referring to Figure 7, there is shown an additional power supply 57 which is modular with the body 32. It includes interface member 56, preferably in the form of a plate, and battery compartment 58. The interface member 56 can be a separate structure to the compartment 58 or be combined as shown in Figure 7. Interface member 56 effectively provides the interface between the series of pressure pins 54 and the input/output of data and power through cable 60. Therefore, an external device can be attached to the cable 60 to provide data to and from the main printed circuit board and memory stored in body 32 and provide power to the apparatus 2.

Alternatively, the compartment 58 can be attached directly to the bottom side 52 of the body 32 and is able to fit a small sized battery, such as AA or AAA, to provide power through the set of pressure pins 54 to the whole apparatus 2 through the main circuit board. The interface member 56 can attach to the bottom side 52 of body 32 through quick connectors or fasteners. Similarly, the compartment 58 can attach to the underside of interface member 56 through quick connectors or fasteners.

Rather than using the battery compartment 58 at the front of the helmet 3, which adds weight to the front of the helmet 3, there is an option to use the interface member56 at the back part of helmet 3 and have cable 60 attached to a power unit and optionally an additional weight at the back of the helmet 3. This can balance the weight between the front and back of the helmet 3. Where the helmet 3 is used in ground force exercises or combat it is possible to wear a heavy helmet and in this situation additional weight can be attached at the back of the helmet to balance out the weight at its front, which is in part created by the compartment 58.

In the case of aircraft pilots, they need a lighter weighted helmet and, therefore, a power pack or a battery pack can be used and fitted to the rear of the helmet and deliver power through cable 60 and interface member 56 to the components on the circuit board in body 32 located at the front of the helmet 3. Thus, it does away with the use of the battery compartment 58 at the front of the helmet 3.

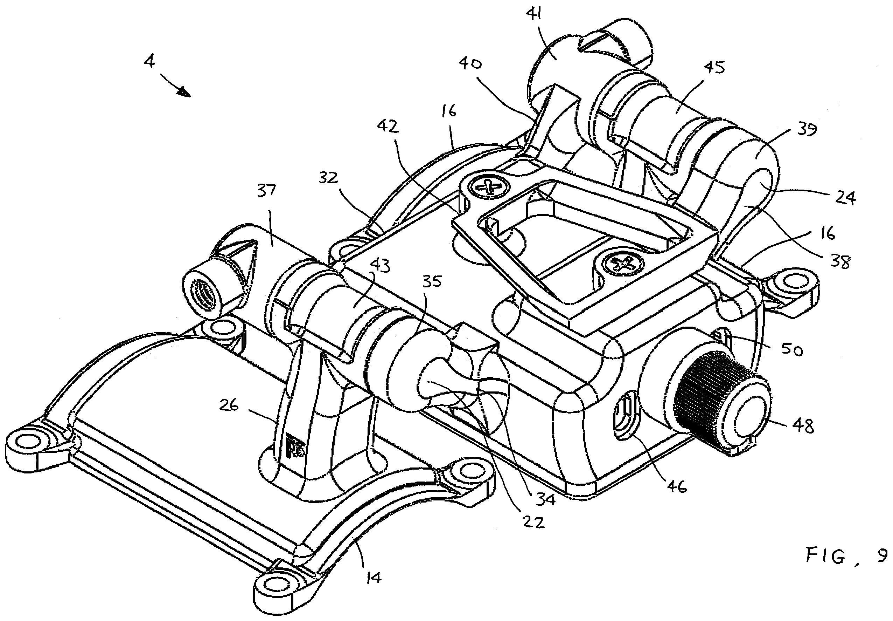

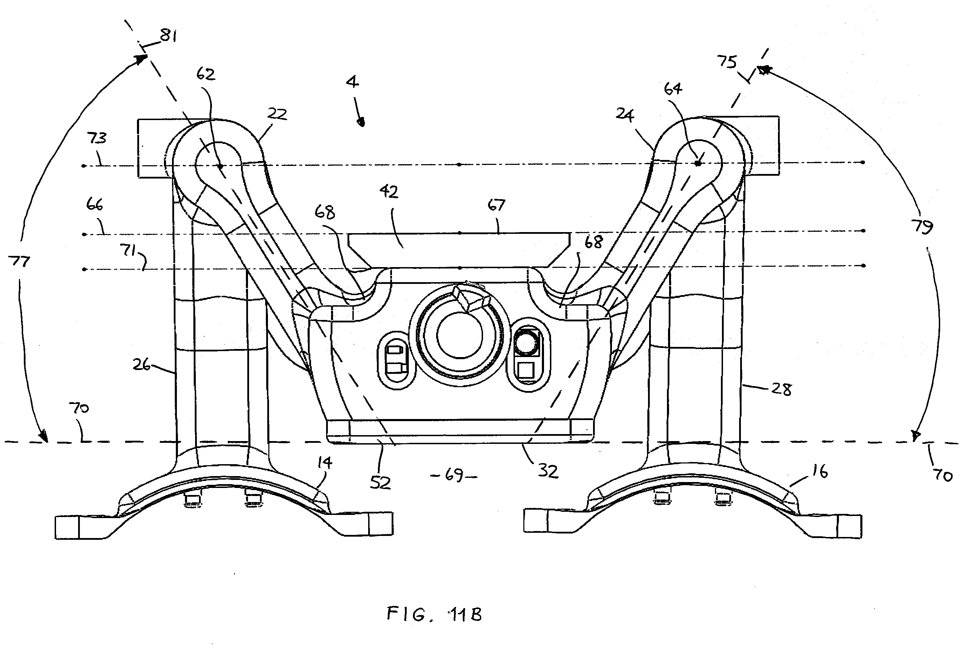

Referring to Figures 8 and 9, there is shown perspective views of the bridge member 4 from two different angles. As mentioned previously each of the first and second legs 26 and 28 are able to pivot about first and second hinges 22 and 24 respectively. In Figures 11A and 11B, the bridge member 4 is shown from the front (as if positioned in front of the user when the user is looking through the tubes 6, 8 as in Figure 12) in an in-use position (active position) with each of first leg 26 and second leg 28 substantially vertical or perpendicular to plane 66, plane 66 being horizontally in line with the top side 67 of connector 42. The tubes or barrels 6, 8 are not shown for clarity purposes. The body 32 fits within the space 69 defined between each of the first and second legs 26 and 28 and will still have room to either position the interface member 56, the compartment 58 or both the interface member 56 and the compartment 58 joined to the body 32 in a modular fashion.

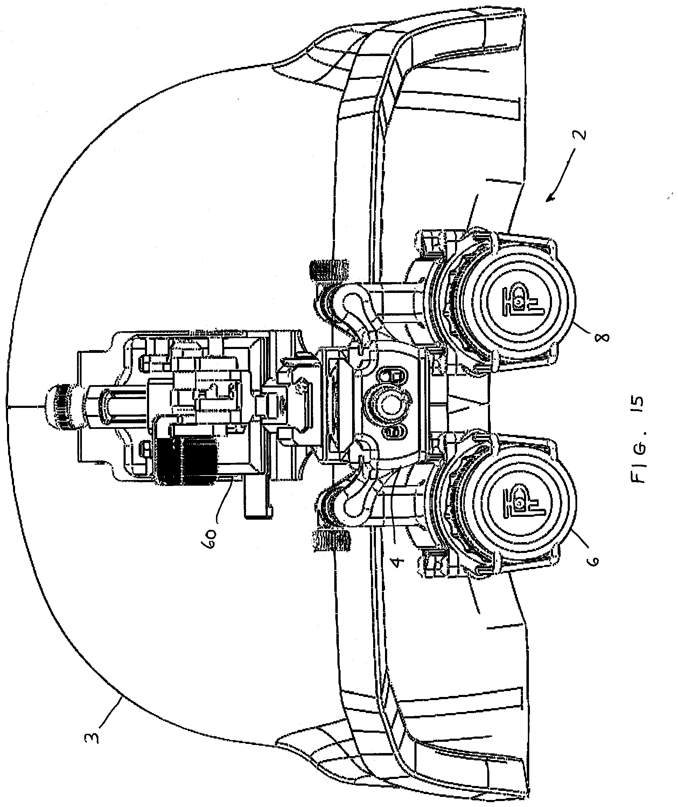

Figures 12 and 15, respectively show side and front views of the bridge member 4 attached to respective tubes 6 and 8 where the apparatus 2 can be used; that is, the apparatus 2 is in an active position or in-use position for the wearer of the helmet 3. To suit different users and differing distances between the eyes of users, each of the first and second legs 26 and 28 can respectively rotate about first and second hinges 22 and 24 to make the position, for example, shown in any one of Figures 1, 2 and 3. This is possible due to the first hinge axis 62 of first hinge 22 and the second hinge axis 64 of second hinge 24, both in hinge axis plane 73, being positioned above, away and parallel to the plane 66 (as shown in Figure 11A and 11B) taken horizontally along the top side 67 of connector 42 when the apparatus 2 (and the first and second tubes 6, 8) is in an in-use, active position, being the first position shown in Figures 1 and 2. Thus, a range of positions of one tube 6 relative to the other tube 8, including the compactness of the apparatus shown in Figure 1 is possible due to each hinge axis 62, 64 being above (as seen in Figure 11A) plane 66 going through top side 67 of connector 42. As seen in Figure 11A the location or position of the hinge axis plane 73 is on an opposite side of body 32 compared to each of the tubes 6, 8.

The position of the axes 62 and 64 with respect to the top side 68 of the body 32, rather than being above top side 67, may alternatively be adjacent to, or at, the level (see Figure 4) or slightly above the level of the top side 68, such that plane 73 (and therefore the axes 62, 64 of first and second hinges 22, 24) can be between any part of the top side 68 of body 32 through (plane 71) and the top side 67 (through plane 66) of connector 42. Otherwise, plane 73 having both axes 62, 64 can be above plane 66 which goes through top side 67. The length of each of first leg 26 and second leg 28 may be variable, from 20mm to 40mm each or even longer. The length of each arm 34, 36, 38 and 40 may be up to 30 or 40 mm in length or even longer. Alternatively, the arms 34, 36, 38 and 40 can be short or not exist at all, whereby the hinges 22 and 24 are next to or adjacent the body 32.

In Figure 11B, the angle 77 of arms 34 and 36, between planes 70 and 81 (that goes through axis 62 and each arm 34, 36), and also the angle 79 of arms 38 and 40, between planes 70 and 75 (that goes through axis 64 and each arm 38, 40), where horizontal plane 70, that extends horizontally through the bottom side 52 of body 32, may be between zero degrees and no more than about 60 degrees. However, the length of the arms 34, 36, 38 and 40, if used, and the angles 77 and 79 must be such that the plane 73, through the axes 62, 64 does not exceed or go beneath plane 71 and top side 68 of body 32 in the in-use position.

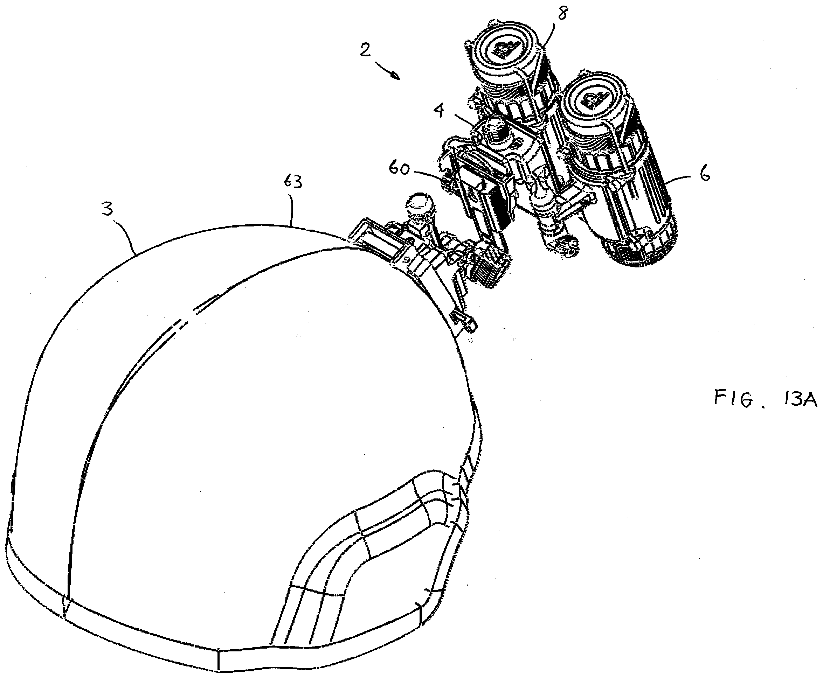

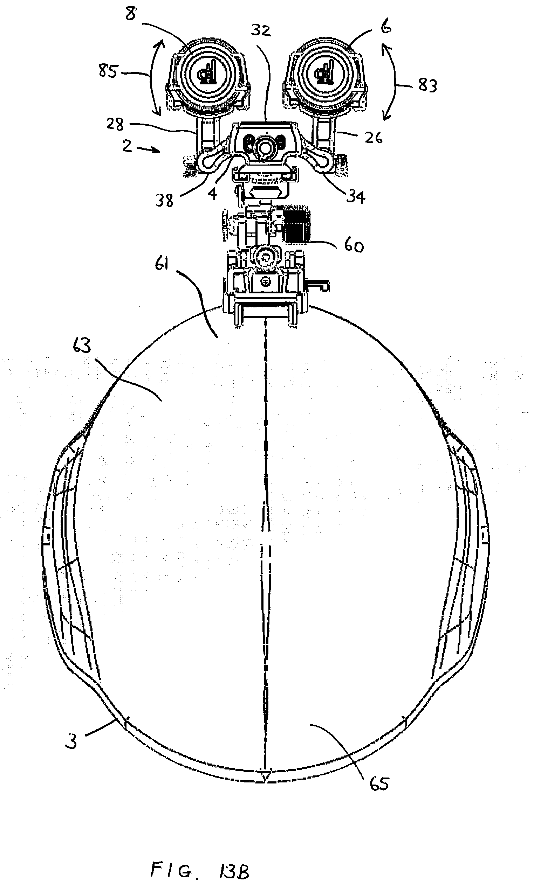

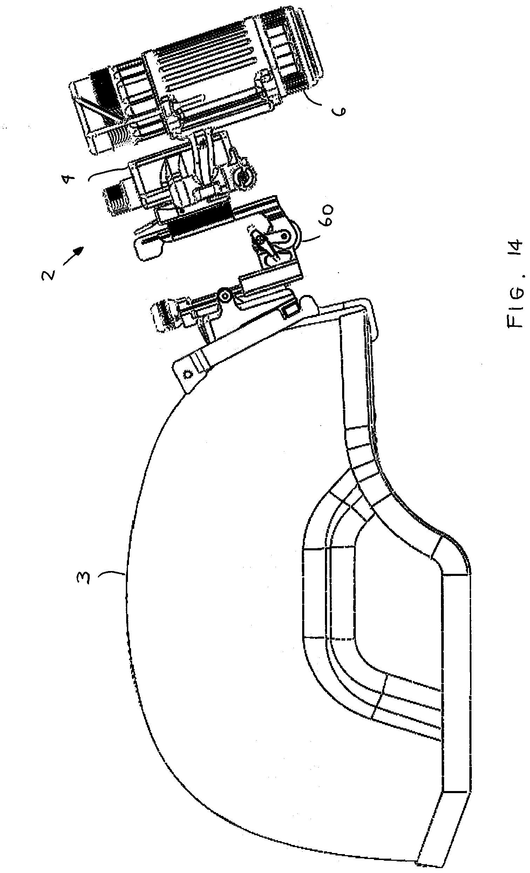

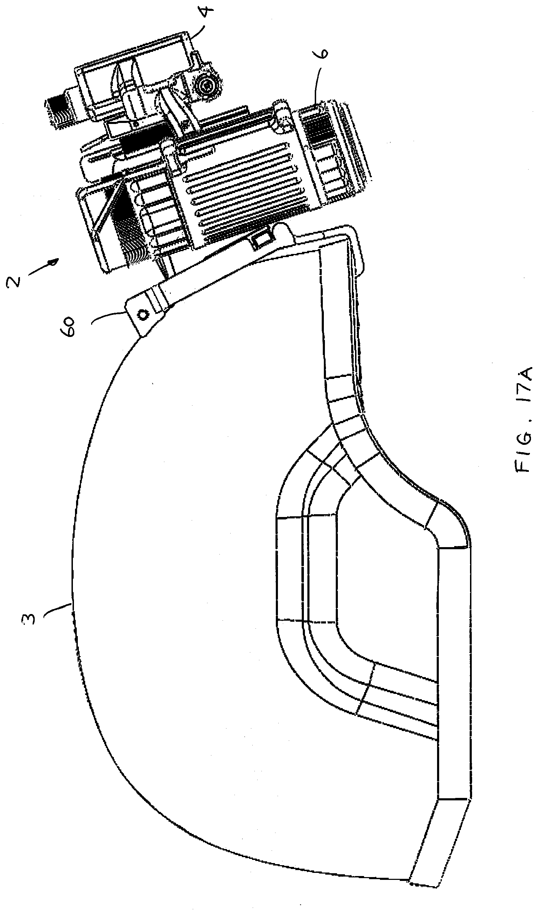

Referring to Figures 13A, 13B and 14 there is shown the apparatus 2 attached to an outer surface 63 of helmet 3 through the bridge member 4 and helmet mount 60. The apparatus 2 is shown either in a stored position or non-use position (non-active position), or in between a stored position or non-use stored position (non-active position) on the helmet 3 and an in-use position (active position) as was discussed in relation to Figures 12 and 15. When the user has finished using the apparatus 2, it is moved from the position in front of the helmet 3, shown in figures 12 and 15, to the interim position shown in Figures 13A, 13B and 14, and then finally to the stored position shown in Figures 17A, 17C and 17D. The bridge member 4 is shown in a second position, being a stored, non-use position, in Figures 17C and 17D.

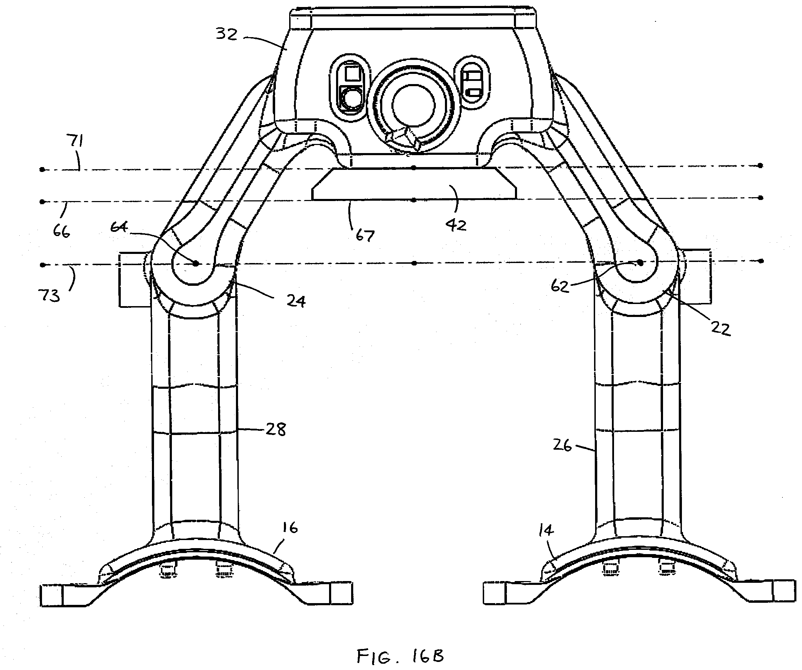

In moving the tubes 6, 8 to the stored position shown in Figures 17A, 17C and 17D, the tubes 6 and 8 are either moved from the position shown in Figure 15 to the position shown in Figure 13B (by the user gripping the tubes 6, 8 and pushing them upwards as the bridge member 4 rotates or pivots about the helmet mount 60), or are separated a little, so that the tubes 6, 8 are more spaced apart. The tubes 6, 8 continue to be gripped by the user and rotated respectively in the direction of the bottom arrow of rotational arrows 83 and 85, towards the outer surface 63 of helmet 3, until a final unused and stored second position is reached as seen in Figures 17C and 17D. In reaching this second position, each of first leg 26 and second leg 28 are rotated about the respective first and second hinges 22 and 24 to bring the tubes 6 and 8 into a position shown in Figures 16B 17C and 17D, adjacent to outer surface 63 or, specifically, front portion 61 of helmet 3. The hinge axis plane 73, that goes through first and second hinge axes 62 and 64, can still be located below plane 66 that aligns with the top 67 of mounting 42 (as seen in Figures 16B) such that plane 73 is between plane 66 and first and second connecting members 14, 16. Alternatively the hinge axis plane 73 can be located/aligned on plane 71 (aligned with the top surface 68 of body 32), or located on plane 66 or anywhere in between planes 66 and 71 going through any part of the connector 42.

Figure 16B is an upside-down configuration of the apparatus shown in Figure 16A, when both barrels or tubes 6,8 are near to or adjacent the outer surface 63 of helmet 3, and as seen from the back 65 of the helmet 3 towards the front 61 of the helmet 3 (as in Figure 17C).

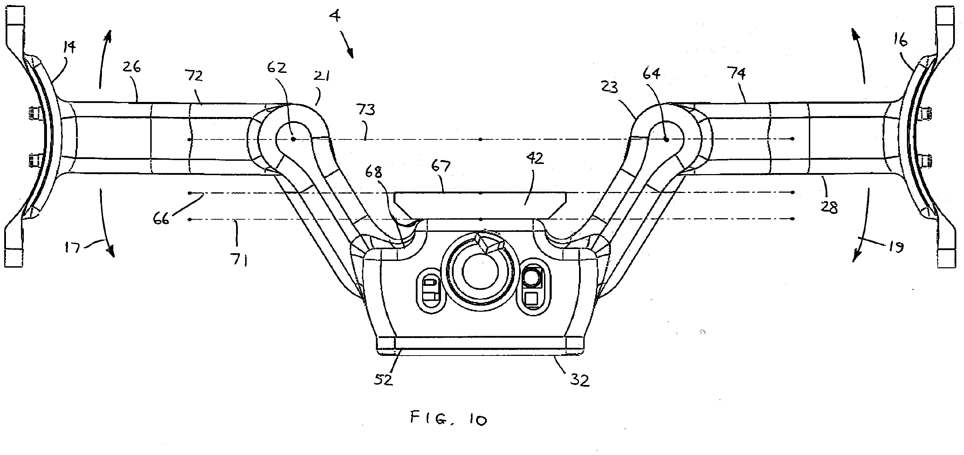

Shown in Figure 10 is the rotation of each of the first and second legs 26 and 28 to a position where they are diametrically opposed and level with horizontal plane 73 that extends through the axes 62, 64 of first and second hinges 22 and 24. Respective sides 72 and 74 of the first and second legs 26 and 28 are above the level of the top surface 67 of connector mount 42. The first and second legs 26 and 28 would be in this position where the bridge member 4 and apparatus 2 are either about to be positioned into an in-use (active) position or are about to be moved to an unused (stored) position, stored adjacent an outer surface 63, at the front or on top of the helmet 3. The distance between the ends of first and second legs 26, 28 as fully extended can be up to 12 to 15 cms apart in this position.

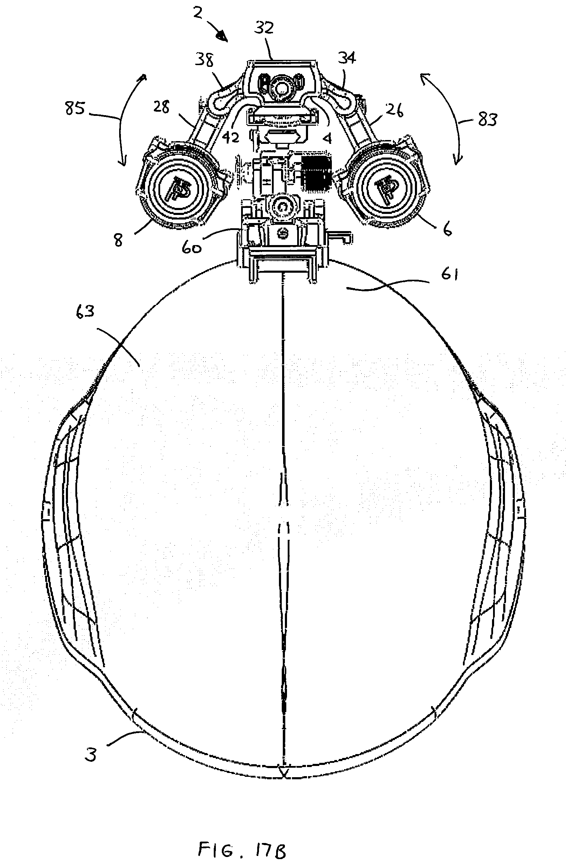

When a user has stopped using the apparatus 2, the user will push outwardly the first and second legs 26 and 28 to spread the tubes 6, 8 apart so that they rotate/pivot respectively about first and second hinges 22 and 24 to the position shown in Figure 10 and then eventually the user moves the apparatus 2 to a position shown in Figures 16A, 16B or 17. To get to this this position (shown in Figures 16A, 16B and 17), the first and second legs 26 and 28 have gone through a rotation, about respective first and second hinges 22 and 24, of up to 180 degrees or at least between 180 and 210 degrees, so that at least a part of the body 32 is positioned below the plane 73 of the axes 62 and 64, as seen in Figure 16A.

When stored on top of the helmet 3 (Figures 16B and 17), in this position the eye piece first ends 10, 12 of the tubes 6 and 8 now face outwardly from the helmet front portion 61 and both tubes 6 and 8 are placed close to each other and adjacent to the top surface of the helmet 3 in an unused position. This lowers the centre of gravity of the apparatus 2 and is much easier to manage for the user when not using the goggles.

The main circuit board, located in the body 32, is able to control the amount of light entering each of image intensifier tubes 6,8 up to a threshold value. Each image intensifier tube 6, 8 can be set up differently, with different light exposures required for each tube 6, 8. A threshold value of detected light (through sensors 46, 50) entering the tubes is adjusted digitally from the main circuit board.

For one or both of the tubes 6, 8 this may be set at a particular lux value, above which the power/light is cut-off to that tube 6, 8. Other information is able to be gained and transmitted back to the circuit board to be stored in memory, such as how long each tube 6, 8 has received light at particular values or the amount of light emitting in each tube 6, 8 and at what levels, and the operating time of each tube 6,8. It is possible to change the angle, through accelerometers, at which the light cuts out, when the apparatus 2 is detected as not in use, for example. Receiving this information is possible through two-way data transmission and requires a transceiver (transmit and receive) function to replace the one-way transmitter 130 in US patent number 10,061,113.

Software drivers stored in the main circuit board, or in each tube 6,8 are able to drive a clear see-through screen, placed between a respective lens and the associated tube, to display information and messages to a user by seeing through each tube 6,8. The lens focusses on the information displayed on the clear screen.

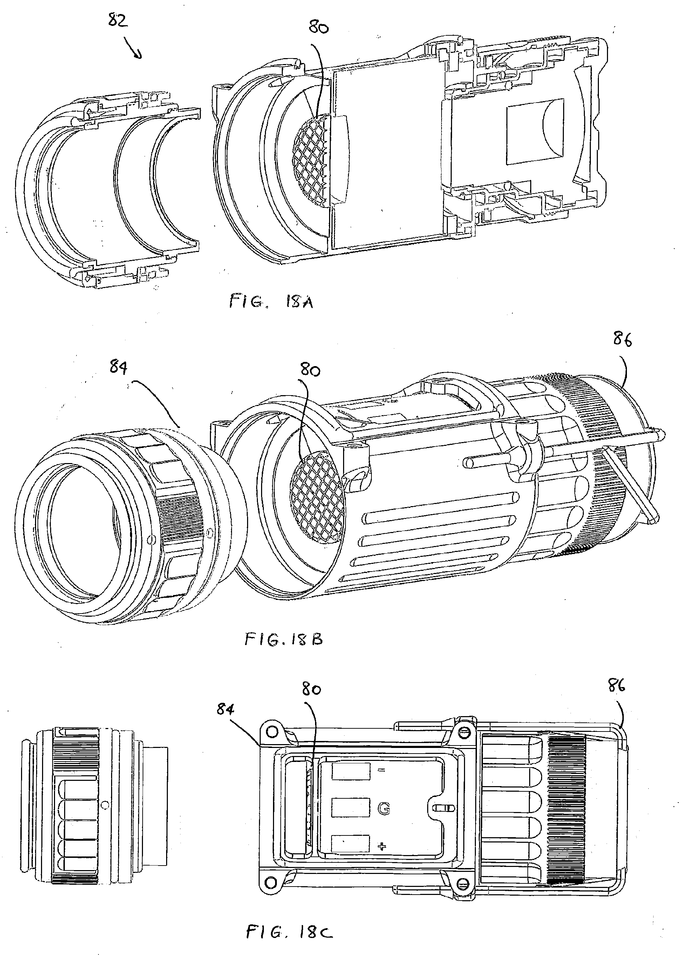

Figures 18A, 18B and 18C show various views of a screen 80 positioned near the middle of the barrel 82. The circular screen 80 can be placed anywhere in the barrel 82, closer to either end 84, 86. This screen is about half size, in that the radius is about half of the full barrel size. If there is a dividing wall, the screen 80 can be positioned on either side of the wall. If there is no divider, then the screen can be glued to the inside of the barrel 82.

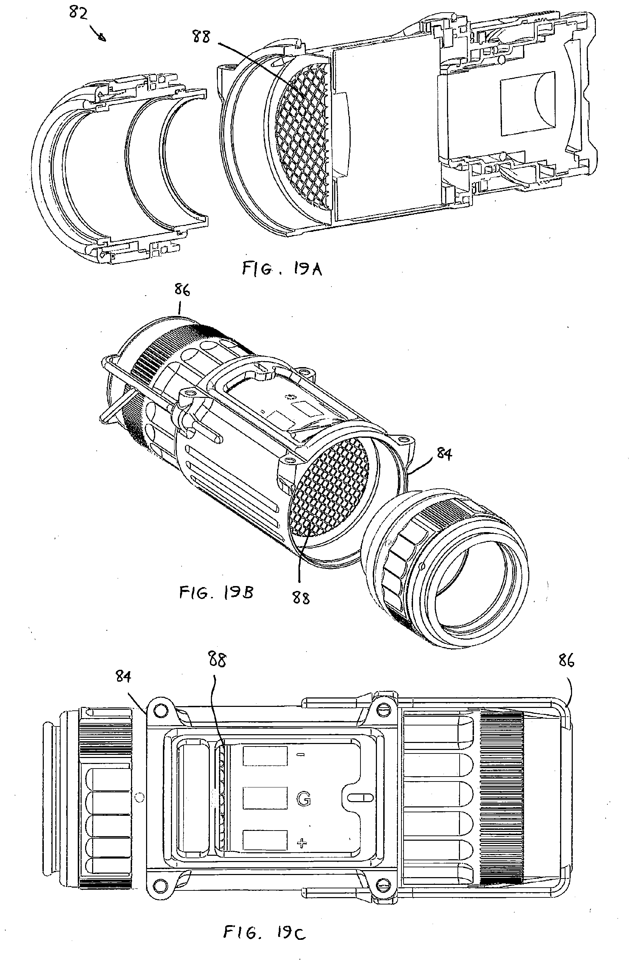

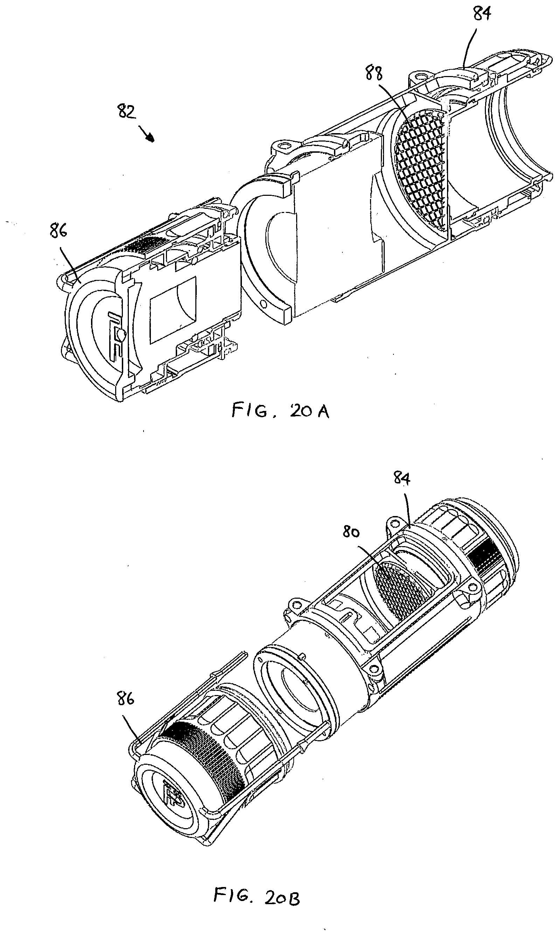

Figures 19A, 19B, 19C, 20A and 20B show a larger screen 88 that is the full size of the barrel, to fit more information on it.

The above information, stored in the memory of the main circuit board, can be downloaded at any time to a remote unit. Other information available to be downloaded includes but is not limited to: amount of time the battery last; the above information about the light exposure levels in the image intensifier tubes 6, 8; how much time the apparatus is used and in what environment; how many hours of training use, and at night; and/or how the goggles are treated by an individual.

Information that can be uploaded to the main board memory includes, but is not limited to: when the googles were last serviced; who serviced the goggles; the name of the person(s) using the goggles and from what dates and times; and/or the names of persons collecting the goggles including date and time.

It is the flexibility of the bridge member 4 which enables the position of the tubes 6, 8 to be closer to the helmet 3 and to each other when stored and not in use and also to enable the tubes 6 and 8, through their respective first and second hinges 22 and 24, to be able to be rotated up to and at least 180 degrees when the goggles are brought down from the stored position on the helmet 3 to an in-use position to be used by a user or vice-versa.

It will be appreciated that variations of the above-disclosed embodiments and other features and functions, and/or alternatives thereof, may be desirably combined into many other different systems and/or applications. Also, various presently unforeseen and/or unanticipated alternatives, modifications, variations, and/or improvements therein may be subsequently made by those skilled in the art which are also intended to be encompassed by the description above and the following claims.

## Claims

1. A bridge member (4) for connecting first and second image intensifier tubes (6, 8) in a portable night vision apparatus (2) including:
a body (32);
a first pivotable member (21) associated with said first image intensifier tube (6);
a second pivotable member (23) associated with said second image intensifier tube (8);
said bridge member (4) being configured to be connected to a helmet (3) through a helmet mount (60);
said bridge member (4) being configured to move between a first position and a second position, said first position corresponding to said first and second image intensifier tubes (6, 8) being in an active position, said second position corresponding to said first and second image intensifier tubes (6, 8) being in a stored position, said second position corresponding to the first and second image intensifier tubes (6, 8) being positioned adjacent an outer surface (63) of the helmet (3);
said first pivotable member (21) being configured to move said first image intensifier tube (6) between said first and second positions;
said second pivotable member (23) being configured to move said second image intensifier tube (8) between said first and second positions.

2. The bridge member (4) according to claim 1, **characterised in that** said first pivotable member (21) includes a first hinge (22) and said second pivotable member (23) includes a second hinge (24), said first and second hinges (22, 24) connected to and spaced apart from said body (32).

3. The bridge member (4) according to claim 2, **characterised in that** said first hinge (22) has a first hinge axis (62) and said second hinge (24) has a second hinge axis (64), and further **characterised in that** the bridge member (4) further includes a helmet mount connector (42).

4. The bridge member (4) according to claim 3, **characterised in that** the helmet mount connector (42) is secured to said body (32) and wherein said first hinge axis (62) and said second hinge axis (64) are located in a hinge axis plane (73) that is at or above a plane (66) through a top side (67) of said connector (42).

5. The bridge member (4) according to claim 3, **characterised in that** the bridge member (4) further includes a helmet mount connector (42) secured to said body (32) and wherein said first hinge axis (62) and said second hinge axis (64) are located in a hinge axis plane (73) where said hinge axis plane (73) is at or between a plane (71) in which a top side (68) of said body (32) is located and a top side (67) of said connector (42) is located.

6. The bridge member (4) according to any one of claims 2 to 5, **characterised in that** said first pivotable member (21) further includes a first leg (26) connecting said first hinge ((22) to said first image intensifier tube (6) and said second pivotable member (23) further includes a second leg (28) connecting said second hinge (24) to said second intensifier tube (8); said first leg (26) is configured to rotate with respect to said first hinge (22) and said second leg (28) is configured to rotate with respect to said second hinge (24).

7. The bridge member (4) according to claim 6, **characterised in that** said first leg (26) is configured to rotate about said first hinge (22) up to 180 degrees in moving between said first position and said second position, and said second leg (28) is configured to rotate about said second hinge (24) up to 180 degrees in moving between said first position and said second position.

8. The bridge member (4) according to claim 4, **characterised in that** said helmet mount connector (42) is attached to a top side (68) of said body (32).

9. The bridge member (4) according to claim 3, **characterised in that** said first hinge axis (62) of said first hinge (22) and said second hinge axis (64) of said second hinge (24) are either:
(a) in a plane (73) that is positioned at or adjacent to a top side (68) of said body (32); or
(b) in a plane (73) that is positioned in between a top side (68) of the body (32) and a top side (67) of the connector (42); or
(c) in a plane (73) that is positioned above and away from a top side (67) of said connector (42), when the first and second image intensifier tubes (6, 8) are in use in said first position.

10. The bridge member (4) according to any one of claims 1 to 5, **characterised in that** the bridge member (4) further includes a first connecting member (14) for connecting a first leg (26) of the bridge member (4) to the first image intensifier tube (6) and a second connecting member (16) for connecting said second leg (28) of the bridge member (4) to the second image intensifier tube (8).

11. The bridge member (4) according to any one of the previous claims, **characterised in that** said body (32) of said bridge member (4) is configured to house a printed circuit board that enables storage of data and transmission of data between components of the night vision apparatus (2) and between the night vision apparatus (2) and an external transceiver.

12. The bridge member (4) according to claim 11, **characterised in that** the bridge member (4) further includes a battery compartment (58) attachable to an underneath side (52) of said body (32) for providing power to said printed circuit board.

13. The bridge member (4) according to claim 11, **characterised in that** the bridge member (4) further includes an interface member (56) attachable to an underneath side (52) of said body (32) for providing power and data to said printed circuit board.

14. The bridge member (4) according to claim 13, **characterised in that** the bridge member (4) further includes a battery compartment (58) attachable to an underneath side of said interface member (56) for also providing power to said printed circuit board.

15. The bridge member (4) according to any one of claims 2 to 9, **characterised in that** the bridge member (4) further includes a first arm member (29) connecting said first hinge (22) to said body (32), and further **characterised in that** the bridge member (4) further includes a second arm member (31) connecting said second hinge (24) to said body (32).

16. A portable night vision apparatus (2) for attachment to a helmet (3) including:
first and second image intensifier tubes (6, 8); and
a bridge member (4) according to any one of the previous claims, connecting said first and second image intensifier tubes (6, 8).
